Europäisches Patentamt

European Patent Office

Office européen des brevets

(19)

(11) Veröffentlichungsnummer : **0 049 460**
**B1**

(12) **EUROPÄISCHE PATENTSCHRIFT**

(45) Veröffentlichungstag der Patentschrift :
24.04.85

(21) Anmeldenummer : **81107731.2**

(22) Anmeldetag : **29.09.81**

(51) Int. Cl.⁴ : **B 65 D   5/74**, B 29 C  59/02

(54) **Flüssigkeitspackung mit Ausgiessöffnung.**

(30) Priorität : **01.10.80 DE 3037067**

(43) Veröffentlichungstag der Anmeldung :
**14.04.82 Patentblatt 82/15**

(45) Bekanntmachung des Hinweises auf die Patenterteilung : **24.04.85 Patentblatt 85/17**

(84) Benannte Vertragsstaaten :
**AT BE CH DE FR GB IT LI NL SE**

(56) Entgegenhaltungen :
**EP-A- 0 028 299**
**DE-A- 2 208 891**
**FR-A- 1 180 485**
**US-A- 3 379 814**

(73) Patentinhaber : **Tetra Pak Développement SA**
**70, Avenue C.-F. Ramuz**
**CH-1003 Pully-Lausanne (CH)**

(72) Erfinder : **Reil, Wilhelm**
**Altengassweg 16**
**D-6142 Bensheim 1 (DE)**

(74) Vertreter : **Weber, Dieter, Dr. et al**
**Dr. Dieter Weber und Klaus Seiffert Patentanwälte**
**Gustav-Freytag-Strasse 25**
**D-6200 Wiesbaden 1 (DE)**

EP 0 049 460 B1

**Beschreibung**

Die Erfindung betrifft eine Packung für Flüssigkeiten aus Karton, Papier oder dergleichen, die mindestens auf ihrer Innenseite durch eine Kunststoffbeschichtung flüssigkeitsundurchlässig ist und an mindestens einer Seite einen doppelwandigen Dreiecklappen aufweist, dessen Inneres mit dem Inneren der Packung in Verbindung steht, wobei in der oberen Dreieckwand des Dreiecklappens, von dessen Spitze und in das benachbarte obere Wandfeld der Packung reichend, ein eine Versiegelungsnaht aufweisender, ergreifbarer, doppelter Kartonstreifen angebracht ist und mindestens eine der beiden Dreieckwände des Dreiecklappens entlang einer Linie teilweise eingestanzt ist und daneben eine Schweißnaht, durch welche die beiden Dreieckwände flüssigkeitsdicht miteinander verschweißt sind, auf der der Spitze des Dreiecklappens abgewandten Seite vorgesehen ist.

Bekannt sind Packungen für Milch, Säfte und Wasser in Form von Polyedern, insbesondere Parallelepipeden, Tetraedern oder Würfeln.

Die Herstellungsart dieser Flüssigkeitspackungen ist bekannt, wobei eine praktische Art der Herstellung der bekannten Quaderpackungen die Bildung eines Schlauches ist, der dann abgeflacht, gefüllt, querversiegelt und zu Packungen vereinzelt wird. Solche Packungen weisen an zwei gegenüberliegenden Seitenwänden und einer Endwand bzw. an zwei gegenüberliegenden Endwänden und einer Seitenwand Siegelnähte in Form von doppelten Kartonstreifen mit Siegelnaht auf, die man gegebenenfalls hochbiegen und ergreifen kann.

Es sind zahlreiche Öffnungsvorrichtungen entwickelt worden, bei denen beachtet wurde, daß die Packungen einerseits dicht und andererseits leicht öffenbar sein müssen, ob sie nun für pulverförmiges oder körniges Füllgut oder für das Verpacken von Flüssigkeiten gedacht sind. Eine Packung der eingangs genannten Art ist beispielsweise aus der DE-A-22 08 891 bekannt. Dort ist als Öffnungsvorrichtung in einer Hälfte des doppelwandigen Dreiecklappens, nämlich neben dem doppelten Kartonstreifen, eine Schnittlinie und zur Abdichtung auf dem Inneren der Packung zugewandten Seite eine Schweißnaht vorgesehen. Die Schnittlinien gehen vollständig durch die ganze Dicke der Kartonschicht hindurch, selbst wenn bei speziellen Ausführungsformen Stege zwischen den Schnittlinien (bisweilen Perforationslinie genannt) stehen bleiben. Etwa hierdurch entstehende Dichtungsschwierigkeiten werden durch die erwähnte Schweißnaht recht gut behoben.

Wollte man den abreißbaren Zipfel bei der Öffnungsvorrichtung nach der bekannten Packung quer durch den doppelten Kartonstreifen legen, dann ergäbe sich eine kritische Stelle dort, wo Kartonstreifen und Schweißnaht einander kreuzen. Hier ist es bekanntlich stets schwierig, eine absolut flüssigkeitsdichte Versiegelung zu erreichen, weil hier eine unterschiedliche Anzahl von Kartonschichten aufeinandergedrückt und versiegelt werden müssen, nämlich außerhalb der doppelten Kartonnaht jeweils zwei Schichten (die obere und untere Dreieckwand), jedoch im Bereich des doppelten Kartonstreifens an der Kreuzungsstelle vier Schichten, nämlich außer der unteren und oberen Dreieckwand (zwei Schichten) die beiden Schichten des doppelten Kartonstreifens. Gerade an den Übergangsstellen zwischen den Bereichen von vier Schichten und denen mit zwei Schichten, d. h. also an der beschriebenen Stelle, wo der doppelte Kartonstreifen an die obere Dreieckwand ansetzt, befindet sich eine kritische Stelle, die ab und zu und insbesondere bei Versuchen, Probleme erbringt. Daß diese Stelle beim Versiegeln kritisch ist, folgt auch aus derjenigen Überlegung, daß bei einer vorstehend erwähnten Packung die Siegelwärme nur von unten zugeführt und verständlicherweise durch eine Schicht, nämlich von heißen unteren Siegelbacken nach oben, besser transportierbar ist als durch drei Kartonschichten.

Dennoch hat sich auch bei der vorstehend beschriebenen Pakkung nach dem erwähnten Vorschlag mit der einseitigen Schnittlinie der Vorteil ergeben, daß die Öffnungsvorrichtung erst nach dem Formen, Füllen und Verschließen der Packung, gegebenenfalls in einer separaten Station, nämlich an dem nach außen vorstehenden doppelwandigen Dreiecklappen, vorgesehen werden kann. Mit anderen Worten erfolgt sowohl das Einbringen der Schnittlinie als auch das Anbringen der Schweißnaht erst nach dem Füllen und Verschließen der Packung. Dadurch ergeben sich erhebliche maschinentechnische Vereinfachungen. Man braucht die Maschine zum Formen, Füllen, Verschließen und Vereinzeln der Packung nicht mit zusätzlichen Maschinenelementen zur Herstellung einer Öffnungsvorrichtung zu belasten. Die Anbringung der Öffnungsvorrichtung kann vielmehr auch schon bei dem jetzt beschriebenen Vorschlag in einer nachgeschalteten Station erfolgen, bei der vorzugsweise der doppelte Dreiecklappen noch nicht um die Randlinie zwischen oberer Endwand und Seitenwand der quaderförmigen Packung heruntergefaltet, umgelegt und befestigt ist, sondern z. B. is der Ebene der oberen Endwand seitlich heraussteht. Dann können die Maschinenteile zum Einbringen von Schnittlinien und Anbringen von Schweißnähten besonders einfach und wirkungsvoll angreifen. Dieses Verfahren ist auch insofern zweckmäßig, weil bereits vorhandene Packungsherstellungsmaschinen mit einer solchen nachgeschalteten Station versehen werden können, ohne daß man an der Maschinenkonstruktion erhebliche Änderungen vornehmen muß.

Zweck der Erfindung ist nun die Erhaltung der vorstehend genannten Vorteile beim Öffnen bzw.

bei der Anbringung einer Öffnungsvorrichtung einer quaderförmigen Packung, die außerdem noch einfacher zu öffnen ist.

Der Erfindung liegt daher die Aufgabe zugrunde, eine Packung der eingangs beschriebenen Art so zu verbessern, daß mit geringem Aufwand eine die Dichtigkeit noch besser gewährleistende Öffnungsvorrichtung nach dem Füllen und Verschließen an der Packung anbringbar ist, die sich für den Endverbraucher noch einfacher öffnen läßt.

Diese Aufgabe wird erfindungsgemäß dadurch gelöst, daß die Schweißnaht etwa quer durch den doppelten Kartonstreifen verläuft, im Bereich der Schweißnacht die verschiedenen übereinanderliegenden Wandschichten auf fast gleiche Dicke zusammengedrückt sind und daß die Stanzlinie nur von einer Oberfläche der Kartonschicht derart eingebracht ist, daß die andere Oberfläche völlig unverletzt verbleibt. Bei der Stanzlinie gemäß der Erfindung handelt es sich nicht wie im Falle der oben erwähnten bekannten Packung um eine durch die Kartonschicht ganz hindurchgehende Schnittlinie, sondern es wird nur ein Teil dieser Kartonschicht durchgeschnitten oder besser : Durchgestanzt, nämlich etwa die Hälfte oder zwei Drittel der Karton- bzw. Pappschicht. Dadurch wird auf der nicht eingestanzten Seite der Kartonschicht deren Oberfläche völlig unverletzt gelassen. Folglich ergeben sich bessere Voraussetzungen für das Versiegeln und damit für die Dichtigkeit, insbesondere an der bei der oben beschriebenen vorgeschlagenen Packung kritischen Stelle, wo nämlich der doppelte Kartonstreifen an die obere Dreieckwand anschließt. Um nun das Versiegeln noch besser auszugestalten, werden nach der Lehre der Erfindung die verschiedenen übereinanderliegenden Wandschichten auf fast gleiche Dicke zusammengedrückt. An dem Bereich, wo die vier Wandschichten, nämlich die zwei des Dreiecklappens und die zwei des Kartonstreifens, übereinanderliegen, wird nach einem Druckvorgang die gleiche Dicke vorgesehen, wie in den Bereichen daneben. Durch die Einwirkung dieser hohen Drücke gleichzeitig mit Wärme kann man ersichtlich eine einwandfrei dichte Siegelnaht auflegen. Das Anordnen einer zuverlässig dichten Schweißnaht gelingt erfindungsgemäß auch über den doppelten Kartonstreifen hinweg, in welchem sich bekanntlich ebenfalls eine Querschweißnaht befindet.

Die neue Öffnungsvorrichtung kann mit Vorteil an der bereits fertig gefüllten und verschlossenen Packung angebracht werden, ohne daß die Voraussetzungen für das sterile Verpacken von Flüssigkeiten gefährdet würde. Dadurch, daß die einzelnen Stanz- und Drucklinien für die Öffnungsvorrichtung erst nach Füllen und Verschließen der Packung eingebracht werden, entfallen mit weiterem Vorteil Dichtigkeitsprobleme bei der Herstellung von Flüssigkeitspackungen bei denen sonst, wenn die Öffnungsvorrichtung durch Anbringen von Perforationen und Schnitten während der Erstellung der Packung eingebracht

wurden, Schnitte, Perforationen und andere Öffnungseinrichtungen beim Verformen unter Spannung kommen konnten, so daß sich Dichtigkeitsprobleme ergaben. Durch die Maßnahmen der Erfindung ist auch während des Abpackprozesses die Papier- oder Kartonbahn stabil und ist nicht durch Perforationen, Schnitt- oder Faltlinien geschwächt.

Die neue Öffnungsvorrichtung gemäß der Erfindung hat auch den weiteren Vorteil, daß man keine weiteren zusätzlichen Materialien einsetzen muß, wie z. B. ein separater Abdeckstreifen oder getrennte Kartonstreifen, die teilweise von der Innenseite und teilweise von der Außenseite der Verpackung im Bereich der Öffnungsvorrichtung aufzubringen wären. Außerdem gibt es innerhalb der Papierproduktion keine besonderen Arbeitsvorgänge, für die zusätzliche Vorkehrungen und Zeiten vorgesehen sein müßten, wie z. B. Schneiden, Perforieren, Stanzen oder Falten. Trotz dieser Vorteile und Vereinfachungen ist es gelungen, die Öffnungsvorrichtung an dem seitlich von der Packung während des Herstellungsprozesses nach dem Füllen herausstehenden Dreieckklappen so anzuordnen, daß auch nicht Luft von außen eindringt, so daß sich die Voraussetzungen für eine aseptische Verpackung erhalten.

Zweckmäßig ist es gemäß der Erfindung ferner, wenn auf beiden Seiten der Stanzlinie eine Schweißnaht angebracht ist. Die wichtigste und unbedingt notwendige Schweißnaht ist diejenige, die sich auf der von der Spitze des Dreiecklappens abgewandten Seite der Stanzlinie befindet. Anderenfalls wäre die Packung nicht dicht. Wenn man aber auch auf der anderen Seite eine Schweißnaht in dem zuletzt erwähnten Sinne vorsieht, kann man die Packung attraktiver und hygienischer einrichten. Ohne diese zusätzliche Schweißnaht auf der Seite der Dreieckspitze könnte sich noch in der Molkerei eine Schmutztasche in Form einer spitzen Tüte bilden, in der außer trockenem Schmutz auch flüssige Produkte angesammelt werden könnten, die unter Umständen sogar die Bakterienentwicklung begünstigen. Diese unappetitlichen Nachteile sind durch die vorstehend erwähnte Maßnahme beseitigt ; mit dem weiteren Vorteil, daß nicht eine Kante längs der Stanzlinie absteht und damit durch Versehen unter Verhaken oder Anstoßen dieser Kante der Öffnungsvorgang zu frühzeitig eingeleitet werden könnte.

Besonders vorteilhaft ist es gemäß der Erfindung, wenn die Schweißnaht sehr schmal ausgebildet ist. Geht man von Quaderpackungen für einen halben Liter Flüssigkeit oder für einen Liter Flüssigkeit aus, dann klafft bei fertiger Packung, welche die Öffnungsvorrichtung gemäß der Erfindung aufweist, die Stanzlinie etwa 0,5 bis 1,5 mm, vorzugsweise 1 mm, auseinander. Die Schweißnaht selbst sollte dann eine Breite von 1 bis 3 mm, vorzugsweise 1,5 bis 2 mm, haben. Durch eine solche schmale Ausgestaltung der Schweißnaht wird das Öffnen erleichtert ; aber auch das Verdichten der Schweißnaht auf eine definierte Dicke wird hierdurch verbessert. Zum Öffnen der Packung reißt der Endverbraucher den vordersten Zipfel des Dreiecklappens ab. Dann stellt der Endverbraucher den doppelten Kartonstreifen aus der Wandfläche der oberen Endwand etwa senkrecht heraus, damit er diesen als Griff benutzen kann. Diesen Kartonstreifen reißt er dann unter Anweisung eines Aufdruckes, insbesondere vorn an der Spitze des Dreiecklappens, hauptsächlich aber im Bereich des ganzen Dreiecklappens, nach oben hoch, wobei gegebenenfalls eine Reißhilfe dadurch gegeben werden kann, daß der Benutzer mit der anderen Hand die beiden Ecken des Dreiecklappens an der oberen Endwand zusammendrückt. Durch dieses Hochreißen wird die Schweißnaht geöffnet, und es ergibt sich unter Bildung der Ausgießtülle die Öffnung der Packung.

Bei weiterer vorteilhafter Ausbildung der Erfindung verläuft die Schweißnaht etwa in der Mitte des Dreiecklappens von dessen einer Seitenkante zur anderen; und insbesondere bogenförmig, wobei der Krümmungsmittelpunkt auf der der Spitze des Dreiecklappens zugewandten Seite der Schweißnaht liegt. Zum einen läßt sich dadurch ein einfaches Werkzeug zum Einstanzen des Dreiecklappens herstellen und anwenden, zum anderen aber erreicht man insbesondere bei der Anordnung des Krümmungsmittelpunktes auf der Seite zur Spitze des Dreiecklappens hin, bezogen auf die Stanzlinie, daß beim Aufreißen der Schweißnaht beim Öffnen durch Hochziehen des doppelten Kartonstreifens die Zugspannung auf die aufzureißende Schweißnaht in der Mitte am größten ist, d. h. dort, wo die Schweißnaht von der gedachten Spitze des Dreiecklappens (die ja inzwischen abgerissen ist) am weitesten entfernt ist. Von dieser Stelle, die etwa unter der Ansatzstelle von doppeltem Kartonstreifen an oberer Dreieckwand liegt, beginnt dann Öffnen der Schweißnaht in beide Richtungen. Den gleichen Vorteil erreicht man auch dann, wenn erfindungsgemäß bei einer anderen Ausführungsform die Schweißnaht als zwei gerade, unter einem Winkel zueinander angeordnete, einander berührende Linien ausgebildet ist, wobei sich der Winkel zur Spitze des Dreiecklappens hin öffnet. Auch hier ist der Berührungspunkt der beiden geraden Schweißlinien wieder dort im Bereich des Ansatzpunktes von doppeltem Kartonstreifen an oberer Dreieckwand, d. h. dort, wo die Schweißnaht von der gedachten Spitze des Dreiecklappens am weitesten entfernt ist.

Es it weiterhin erfindungsgemäß besonders zweckmäßig, wenn bei dem Verfahren zur Herstellung der vorstehend erläuterten Packung nach dem Formen, Füllen und Verschließen der Packung an dem nach außen vorstehenden doppelwandigen Dreiecklappen mindestens eine schmale, aufbrechbare Schweißnaht zum Verbinden der beiden Dreieckwände miteinander angebracht wird, wobei erfindungsgemäß insbesondere längs der Schweißnaht eine teilweise mindestens eine der beiden Dreieckwände des Dreiecklappens durchdringende Stanzlinien angebracht wird und beim Anbringen der Schweißnaht unter Verwendung von Lufteintritt die verschiedenen Übereinanderliegenden Wandschichten auf fast die gleiche Dicke zusammengedrückt werden. Durch das Zusammendrücken der Kartonschichten wird auch der ungleich dicke Bereich, d. h. die ungleiche Anzahl der Materialschichten, auf im wesentlichen absolut gleiche Dicke zusammengepreßt. Hierdurch wiederum wird die Dichtigkeit an der oben beschriebenen kritischen Stelle überbrückt und ausgeschaltet. Hinzu kommt, daß durch den hohen Druck die Fasern der Pappschicht oder Kartonschicht hinter der Schnitt- bzw. Stanzspur, wo die Materialschicht nicht ganz durchgetrennt ist, schwach angesiegelt werden. Hierdurch wird beim Abreißen des äußersten Zipfels des doppelwandigen Dreiecklappens die Reißspur sauber geführt.

Die Vorrichtung zur Herstellung einer Packung der eingangs genannten Art, bei welcher ein der Form der Schweißnaht angepaßter Schweißstempel temperaturregelbar relativ zu einem Gegenbacken beweglich vorgesehen ist, ist erfindungsgemäß dadurch gekennzeichnet, daß der Schweißstempel und der Gegenbacken mit je einer herausstehenden, einander entgegengerichteten Stanzkante versehen ist und daß der Schweißstempel eine Matrize und der Gegenbacken eine Patrize aufweisen, deren Höhe jeweils derart größer als die Höhe der Stanzkante ist, daß im Zustand des Stanzens Matrize auf Patrize aufliegt und zwischen den Stanzkanten ein Abstand verbleibt. Die Stanzkanten sind heiß und schneiden oder stanzen mit gleichzeitigem Schweißeffekt. Man spricht deshalb besser von Stanzen als von Schneiden, weil die Kartonschicht nur teilweise durchschnitten wird. Das Material wird mit anderen Worten auf eine gewisse Tiefe eingestanzt. Durch den Abstand zwischen den Stanzkanten wird sichergestellt, daß ein sehr hoher Druck aufgebracht werden kann, so daß die oben erwähnte Zusammendrückung der verschiedenen übereinanderliegenden Wandflächen auf die gleiche Dicke gewährleistet ist. Durch die gegenüberliegenden Stanzkanten ist ferner sichergestellt, daß die dazwischen befindliche Materialschicht auf jeder Seite eine Stanzlinie erhält, ohne daß auch nur eine Materialschicht vollständig durchtrennt wird. Hierfür ist es besonders vorteilhaft, wenn erfindungsgemäß die Höhe jeder Stanzkante kleiner als die Dicke der Pappschicht ist. Andernfalls könnte die Stanzkante eine Materialschicht ganz durchdringen und das Herausfließen des Packungsgutes ermöglichen.

Durch Matrize und Patrize wird eine Abstandssteuerung zwischen den aufeinander zugerichteten Stanzkanten bei ebenfalls steuerbarem, hohem Druck besorgt. Dabei ist es gemäß einer weiteren bevorzugten Ausführungsform der Erfindung zweckmäßig, wenn jede Stanzkante kreisförmig ist, vorzugsweise Stempel und Backen relativ zur Packung drehbar und mit einer Reinigungsvorrichtung versehen sind. Der Radius der kreisförmig ausgebildeten Stanzkante sollte dabei nicht zu groß gewählt werden, damit auf dem Dreiecklappen die Stanzlinie tatsächlich noch die Gestalt eines Bogens in dem oben beschriebenen Sinne hat. Außerdem ist es zweckmäßig, wenn die Stanzkante aus gehärtetem Metall gefertigt ist. Die Drehung der Stanzkante relativ zur Packung erfolgt selbstverständlich nach dem Zusammendrücken und Schweißen, bzw. zwischen zwei aufeinanderfolgenden Stanz- und Schweißvorgängen. Nachdem somit der eine Bereich der Stanzkante das Stanzen besorgt hat, wird dieser Bereich danach aus dem Arbeitsgebiet herausgedreht, so daß er dann von der Reinigungsvorrichtung erfaßt werden kann. Hierbei kann es sich um eine Abstreifervorrichtung, z. B. aus Federblech, handeln, die so weich ist, daß sie nicht die Stanzkante beschädigt. Zum Beispiel kann eine drehende Kupferbürste zum Abstreifen etwaiger Materialreste vorgesehen sein.

Hinsichtlich des außerordentlich hohen Druckes, der über die Matrize und Patrize auf die Stanzkanten und die danebenliegenden Schweißbereiche ausgeübt werden kann, ist festzustellen, daß dieser ein Mehrfaches von dem Druck sein sollte, der für das Schweißen gebraucht wird. Dieses stellt besonders zuverlässig das Erreichen der exakten Tiefe der Stanzkante im Papier sicher.

Die mit der oben beschriebenen Öffnungsvorrichtung versehene Packung wird nach Durchlaufen der Stanz- und Schweißvorrichtung weiter so behandelt, daß der Dreiecklappen durch Punktschweißen in bekannter Weise auf eine der schmalen Seitenwände heruntergeklappt und dort befestigt wird. Auf diese Weise werden alle etwa durch unbeabsichtigte äußere Eingriffe gefährdeten Teile geschützt, und außerdem erhält die Packung die übliche Quaderform, die sich auf dem Markt weitgehend durchgesetzt hat.

Zum Öffnen muß der Endverbraucher lediglich den Dreiecklappen abreißen und in die Ebene der oberen Endwand stellen, danach längs der Stanzlinie den äußeren Zipfel in der Nähe der Spitze des Dreiecklappens abreißen, und dann den oben beschriebenen Reißvorgang einleiten, in dem der doppelte Kartonstreifen hochgestellt, ergriffen und unter Öffnen der Schweißnaht hochgezogen wird.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen :

Figur 1   die mit der Öffnungsvorrichtung versehene Flüssigkeitspackung im noch verschlossenen Zustand für den Transport und die Lagerung,

Figur 2   die Packung der Fig. 1 mit hochgestelltem Dreiecklappen zum Vorbereiten des Öffnungsvorganges,

Figur 3   eine Seitenansicht auf die geöffnete Packung beim Ausgießen,

Figur 4   eine Draufsicht auf die Packung im Zustand der Fig. 2 mit einer ersten Ausführungsform der Stanzlinie,

Figur 5   die gleiche Ansicht wie Fig. 4, jedoch mit einer zweiten Ausführungsform der Stanzlinie,

Figur 6   eine Querschnittsansicht entlang der Linie A-A der Fig. 4,

Figur 7   schematisch eine Teilschnittansicht eines Schweißstempels mit Matrize und dem Gegenbacken mit Patrize,

Figur 8   eine vergrößerte und schematische, abgebrochene Schnittansicht entlang der Einzelheit in B in Fig. 7,

Figur 9a   einen Teilquerschnitt einer Stanzkante einer anderen Ausführungsform und

Figur 9b   eine weitere andere Ausführungsform einer Stanzkante in ähnlicher Teilquerschnittsansicht wie Fig. 9a.

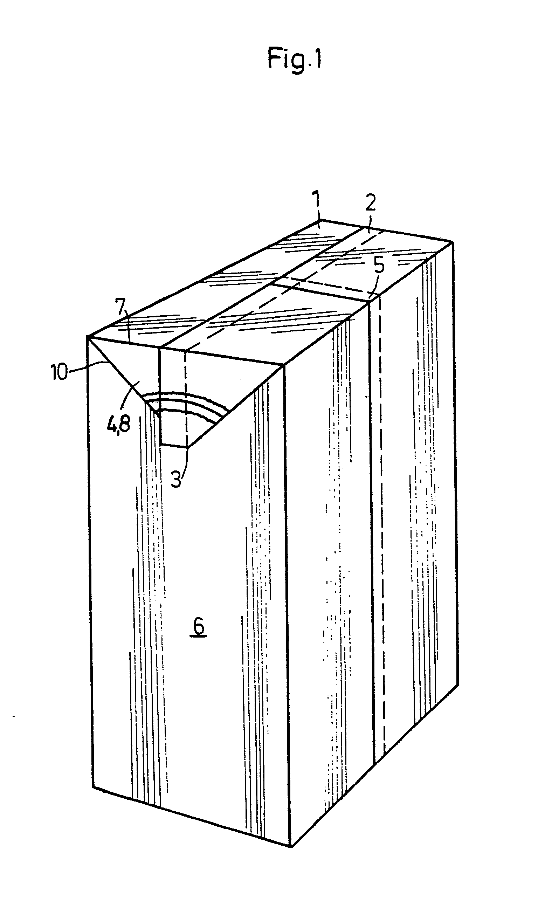

Die in den Fig. 1 bis 3 perspektivisch dargestellte Flüssigkeitspackung aus mit auf beiden Seiten mit Kunststoff beschichtetem Karton hat die Form eines Quaders mit einer oberen Endwand 1, in der ein doppelter Kartonstreifen 2 angeordnet ist, der von der Spitze 3 des gezeigten vorderen Dreiecklappens 4 und in das benachbarte obere Wandfeld der oberen Endwand 1 reichend, bis zur gegenüberliegenden, nicht gezeigten Spitze des ebenfalls nicht gezeigten anderen Dreiecklappens reicht. Die unteren Dreiecklappen sind ebenfalls nicht dargestellt.

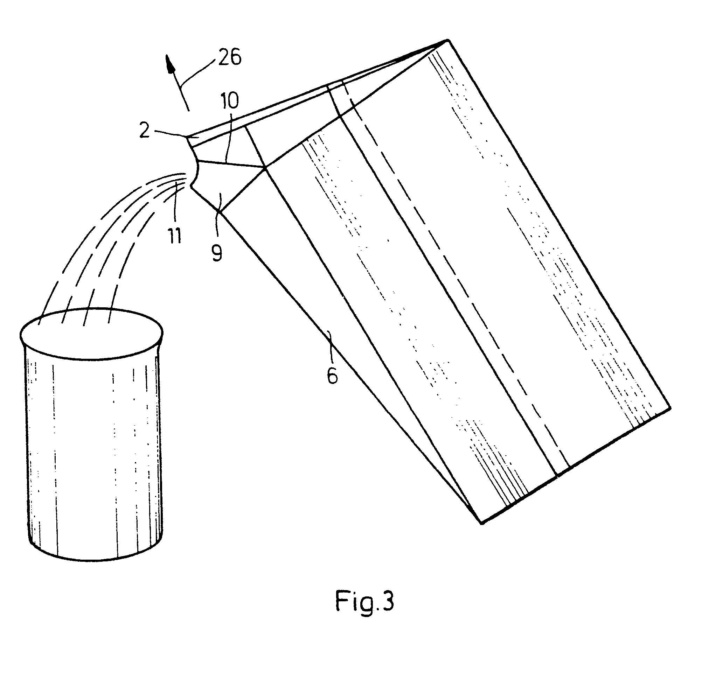

Ein weiterer, eine Siegelnaht aufweisender doppelter Kartonstreifen 5 verläuft quer durch die obere Endwand 1 und endet in der oberen Endwand 1 an einer Kreuzstelle in dem doppelwandigen Kartonstreifen 2. Die vordere schmale Seitenwand 6 ist bei dieser Ausführungsform glatt und mit der oberen Endwand 1 über die Randlinie 7 verbunden, um welche der Dreiecklappen 4 heruntergeklappt und auf der vorderen Seitenwand 6 angeheftet ist. Das Innere des Dreiecklappens 4 steht mit dem Inneren der Packung direkt in Verbindung. Die in Fig. 1 sichtbare obere Dreieckwand ist mit 8, die in den Fig. 3, 6 und 8 sichtbare untere Dreieckwand mit 9 bezeichnet. Die Seitenkanten des Dreiecklappens 4 sind mit 10 bezeichnet.

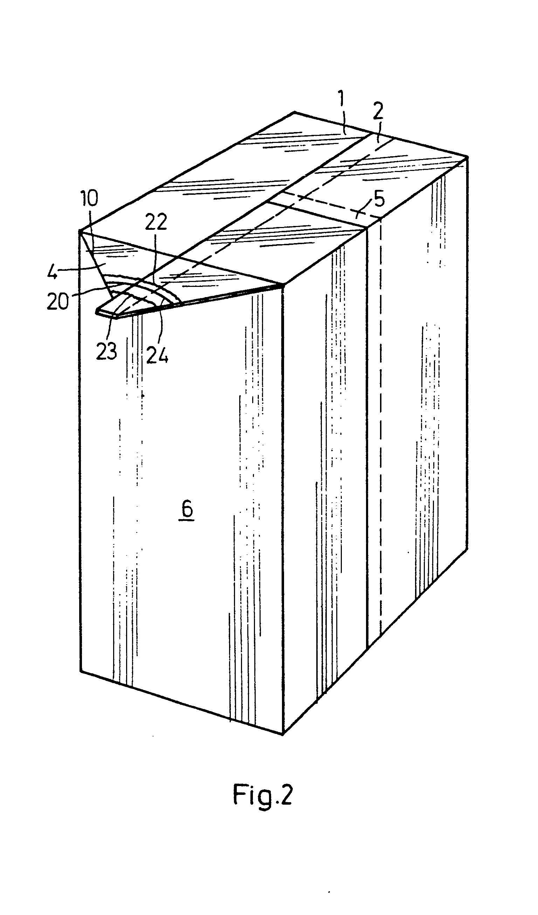

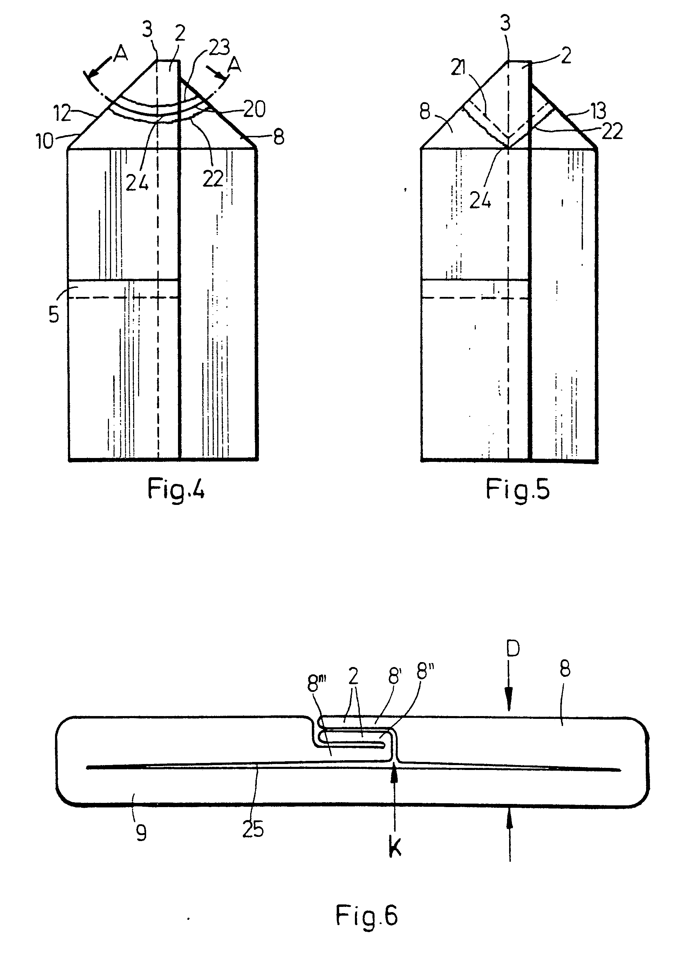

Mindestens eine, bei der bevorzugten und gezeigten Ausführungsform : beide Dreieckwände 8 und 9 des Dreiecklappens 4 sind mit einer Stanzlinie versehen, die bei der Ausführungsform der Figuren 2 und 4 mit 20 und bei der Ausführungsform der Fig. 5 mit 21 bezeichnet ist. Die Stanzlinie 20 verläuft bogenförmig derart, daß der Krümmungsmittelpunkt auf der der Spitze 3 des Dreiecklappens 4 zugewandten Seite liegt. Nach Fig. 5 ist die Stanzlinie 21 aus zwei geraden, unter einem Winkel zueinander angeordneten, einander berührenden Linien gebildet, wobei sich der Winkel in Fig. 5 nach oben zur Spitze 3 des Dreiecklappens 4 hin öffnet. Beiderseits der Stanzlinie 20 ist eine Schweißnaht 22 bzw. 23 (Fig. 2 und 4) angeordnet, während bei der anderen Ausführungsform nach Fig. 5 nur auf der der Spitze 3 des Dreiecklappens 4 abgewandten Seite eine Schweißnaht 22 angeordnet ist. Die Schweißnaht 22 ist die wichtigere von den beiden, denn sie dichtet das Innere der Packung gegenüber der Stanzlinie 20 ab. Die dem äußeren (später abreißbaren) Zipfel des Dreiecklappens 4 zugeordnete Schweißnaht 23 dient lediglich dazu, die Bildung einer abstehenden Kante und damit einer Schmutztasche oder Schmutztüte zu verhinden.

Wenn die somit ausgebildete Packung geöffnet werden soll, muß der eben erwähnte äußere Zipfel des Dreiecklappens 4 entlang der Stanzlinie 20 durch Abreißen im Zustand der Fig. 2 entfernt werden. Zum besseren Verständnis des Aufbaus der Öffnungsvorrichtung ist gemäß Fig. 4 nun ein Querschnitt A-A längs der Stanzlinie 20 gelegt und in Fig. 6 dargestellt. Man erkennt, wie die verschiedenen übereinanderliegenden Wandschichten 8', 8" und 8''' sowie 9 auf die gleiche Dicke D zusammengedrückt sind. Mit anderen Worten sind im Bereich 24 (Fig. 2, 4 und 5), wo sich die Schweißnaht 20 und der doppelte Kartonstreifen 2 kreuzen, die vier Materialschichten 8', 8", 8''' und 9 auf gleiche Dicke D zusammengepreßt wie im Bereich des Doppelpfeiles der Fig. 6, wo nur zwei Materialschichten, nämlich die obere Dreieckwand 8 und die untere Dreieckwand 9, aufeinanderliegen. Dadurch ist der eingangs erläuterte kritische Punkt K gemäß Fig. 6 praktisch ausgeschaltet. In Fig. 6 ist die Schnittdarstellung verständlicherweise übertrieben herausgezeichnet. Man muß sich im Zustand nach dem Abreißen des äußersten Zipfels des Dreiecklappens 4 entlang der Stanzlinie 20 den Bereich 25 zwischen den Materialschichten 8 und 9 noch zugeschweißt denken.

Um diesen Bereich 25, d. h. die auf der Innenseite liegende Schweißnaht 22, aufzureißen und damit die Packung zu öffnen, wird nun der doppelwandige Kartonstreifen 2 vom Benutzer ergriffen, auf der in Fig. 2 gezeigten Lage zur Ebene der oberen Endwand 1 etwa quer hochgestellt und dann in Richtung des Pfeiles 26 in Fig. 3 nach oben gezogen, gegebenenfalls unter Zusammendrücken (mit der anderen Hand) der oberen Randlinie 7, indem man auf die Ecken drückt, die sich durch den Schnitt der Kanten 10 mit der Randlinie 7 ergeben. Nun hat man die Schweißnaht 22 aufgerissen, die Ausgießtülle gebildet und damit die Packung geöffnet. Nach Schrägstellen ist der Zustand der Fig. 3 erreicht, bei welcher Flüssigkeit in einem Strahl 11 in einen Becher gegossen wird.

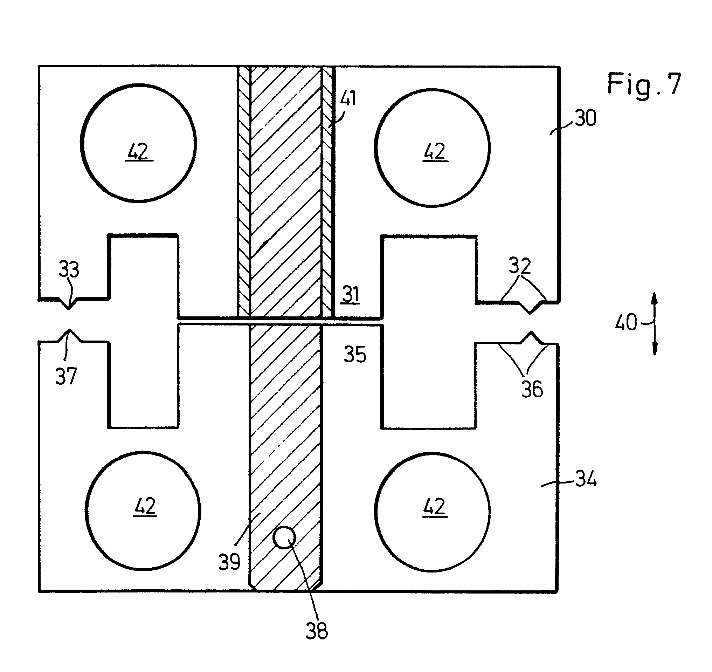

Die Vorrichtung zur Herstellung einer solchen Packung ist schematisch im Schnitt in den Fig. 7 bis 9 gezeigt. Ein der Schweißnaht 22 (bei einer anderen Ausführungsform beiden Schweißnähten 22 und 23) angepaßter Schweißstempel 30 mit Matrize 31 ist mit kreisringförmigen Schweißflächen 32 und einer dazwischen liegenden Stanzkante 33 versehen. Die Verhältnisse sind auf dem Gegenbacken 34 mit Patrize 35, Schweißflächen 36 und Stanzkanten 37 analog. Ein mit einem Stift 38 gesicherter Führungsbolzen 39 läuft zur besseren Führung zwischen Schweißstempel 30 und Gegenbacken 34 bei der Arbeitsbewegung gemäß Doppelpfeil 40 in Fig. 7 in einer Führungsbüchse 41 im Schweißstempel 30. Außerdem sind Öffnungen 42 für Heiz- und Kühlpatronen im Stempel 30 und Backen 34 angeordnet.

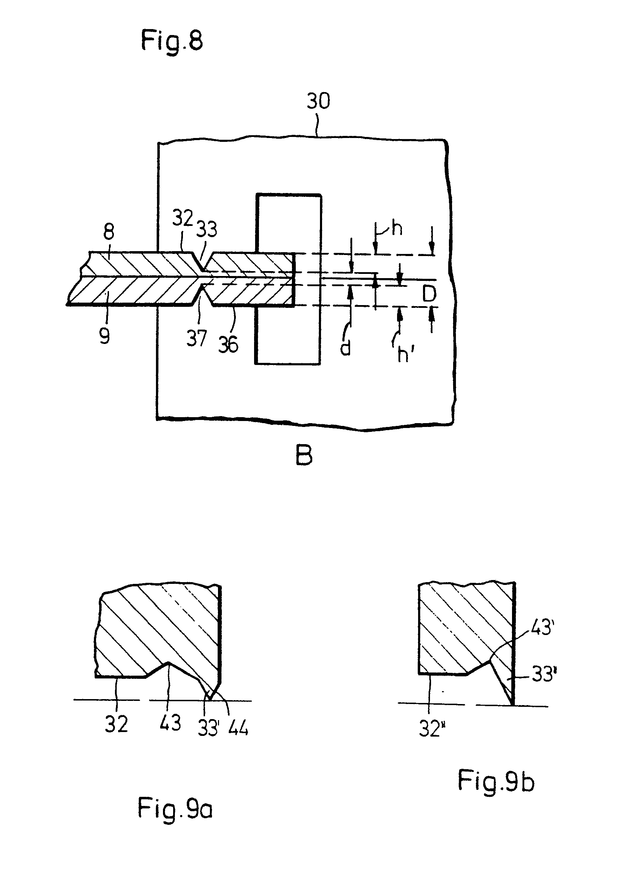

Die Stanzkanten 33, 37 sind bei den Ausführungsformen der Fig. 7 und 8 V-förmig, wobei die Spitzen des V's aufeinander zugerichtet sind. Gemäß Fig. 9a befindet sich nur auf der linken Seite der Stanzkante 33' eine Schweißfläche 32' hinter einer Vertiefung 43, während auf der anderen Seite der Stanzkante 33' nicht eine weitere Schweißfläche 32' angeordnet ist. An der Endflanke 44 der Stanzkante 33' ergibt sich im Betrieb ebenfalls ein Versiegelungseffekt, so daß die Papierfasern seitlich der Stanzlinie etwa gebunden sind. Hierdurch verbessert man die Reißmöglichkeit bzw. das Reißen schlechthin beim Öffnen in der oben beschriebenen Weise.

Eine ähnlich einseitige Anordnung der Stanzkante 33" mit Schweißfläche 32" ergibt sich aus der Ausführungsform der Fig. 9b, bei der zusätzlich aber ein verstärkter zurückgesetzter Bereich 43' zwischen der Stanzkante 33" und der Schweißfläche 32" angeordnet ist. Hierdurch wird ein Widerhakeneffekt erreicht, damit das Papier, insbesondere der verdickte Bereich 24 im Kartonstreifen 2, im Werkzeug 30, 34 festgehalten wird.

Bei bevorzugten Ausführungsformen kann der Abstand d (Fig. 8) zwischen den beiden am weistesten aufeinander zugerichteten Spitzen der Stanzkanten 33, 37 etwa 0,2 mm betragen, während der Abstand D (Fig. 6 und 8) etwa 0,8 mm beträgt. In Fig. 8 ist ferner noch die Höhe h der oberen Stanzkante 33 und die Höhe h' der unteren Stanzkante 37 gezeigt.

Bei dem Zustand der Fig. 7 sind Matrize 31 und Patrize 35 auf Anschlag gegeneinandergefahren, und hierdurch ergibt sich dann der in Fig. 8 gezeigte Abstand d zwischen den obersten Kanten der Stanzkanten 33 und 37 bzw. der Abstand D zwischen den Siegelflächen 32 und 36, zwischen denen beim Anbringen der Öffnungsvorrichtung die Materialschichten der oberen Dreieckwand 8 und der unteren Dreieckwand 9 (Fig. 8) angeordnet sind.

## Patentansprüche

1. Packung für Flüssigkeiten aus Karton, Papier oder dergleichen, die mindestens auf ihrer Innenseite durch eine Kunststoffbeschichtung flüssigkeitsundurchlässig ist und an mindestens einer Seite einen doppelwandigen Dreiecklappen (4) aufweist, dessen Inneres mit dem Inneren der Packung in Verbindung steht, wobei in der oberen Dreieckwand (8) des Dreiecklappens (4), von dessen Spitze (3) und in das benachbarte obere Wandfeld (1) der Packung reichend, ein eine Versiegelungsnaht aufweisender, ergreifbarer, doppelter Kartonstreifen (2) angebracht ist und mindestens eine der beiden Dreieckwände (8, 9) des Dreiecklappens (4) entlang einer Linie (20) teilweise eingestanzt ist und daneben eine Schweißnaht (22, 23), durch welche die beiden Dreieckwände (8, 9) flüssigkeitsdicht miteinander verschweißt sind, auf der der Spitze (3) des Dreiecklappens (4) abgewandten Seite vorgesehen ist, dadurch gekennzeichnet, daß die Schweißnaht (22, 23) etwa quer durch den doppelten Kartonstreifen (2) verläuft, im Bereich der Schweißnaht (22, 23) die verschiedenen übereinanderliegenden Wandschichten (8, 9, 8', 8", 8"') auf fast gleiche Dicke (D) zusammengedrückt sind und daß die Stanzlinie (20) nur von einer Oberfläche der Kartonschicht derart eingebracht ist, daß die andere Oberfläche völlig unverletzt verbleibt.

2. Packung nach Anspruch 1, dadurch gekennzeichnet, daß auf beiden Seiten der Stanzlinie (20) eine Schweißnaht (22, 23) angebracht ist.

3. Packung nach Anspruch 1 oder 2, dadurch gekennzeichnet, daß die Schweißnaht (22, 23) sehr schmal ausgebildet ist.

4. Packung nach einem der Ansprüche 1 bis 3, dadurch gekennzeichnet, daß die Schweißnaht (22, 23) etwa in der Mitte des Dreiecklappens (4) von dessen einer Seitenkante (10) zur anderen verläuft.

5. A packaging means according to one of dadurch gekennzeichnet, daß die Schweißnaht (22, 23) bogenförmig verläuft, wobei der Krümmungsmittelpunkt auf der der Spitze (3) des Dreiecklappens (4) zugewandten Seite der Schweißnaht (22, 23) liegt.

6. Packung nach einem der Ansprüche 1 bis 5, dadurch gekennzeichnet, daß die Schweißnaht (22, 23) als zwei gerade, unter einem Winkel zueinander angeordnete, einander berührende Linien ausgebildet ist, wobei sich der Winkel zur Spitze (3) des Dreiecklappens (4) hin öffnet.

7. Verfahren zur Herstellung der Packung nach einem der Ansprüche 1 bis 6, bei dem nach dem Formen, Füllen und Verschließen der Packung an dem nach außen vorstehenden doppelwandigen Dreiecklappen (4) mindestens eine schmale, aufbrechbare Schweißnaht (22, 23) angebracht wird, dadurch gekennzeichnet, daß längs der Schweißnaht (22, 23) eine mindestens eine der beiden Dreieckwände (8, 9) des Dreiecklappens (4) teilweise durchdringende Stanzlinie (20 ; 21) angebracht wird und beim Anbringen die Schweißnaht (22, 23) unter Vermeidung von Lufteintritt die verschiedenen übereinanderliegenden Wandschichten (8', 8", 8"', 9) auf die gleiche Dicke (D) zusammengedrückt werden.

8. Vorrichtung zur Herstellung einer Flüssigkeitspackung aus Karton oder dergleichen, die mindestens auf ihrer Innenseite durch eine Kunststoffbeschichtung flüssigkeitsundurchlässig ist und an mindestens einer Seite einen doppelwandigen Dreiecklappen (4) aufweist, dessen Inneres mit dem Inneren der Packung in Verbindung steht, wobei in der oberen Dreieckwand (8) des Dreiecklappens (4), von dessen Spitze (3) und in das benachbarte obere Wandfeld (1) der Packung reichend, ein eine Versiegelungsnaht aufweisender, ergreifbarer, doppelter Kartonstreifen (2) angebracht ist und mindestens eine der beiden Dreieckwände (8, 9) des Dreiecklappens (4) entlang einer Linie (20) teilweise eingestanzt ist und daneben eine Schweißnaht (22, 23), durch welche die beiden Dreieckwände (8, 9) flüssigkeitdicht miteinander verschweißt sind, auf der Spitze (3) des Dreiecklappens (4) abgewandten Seite vorgesehen ist, bei welcher ein der Form der Schweißnaht (22, 23) angepaßter Schweißstempel (30) temperaturregelbar relativ zu einem Gegenbacken (34) beweglich vorgesehen ist, dadurch gekennzeichnet, daß der Schweißstempel (30) und der Gegenbacken (34) mit je einer heraustehenden, einander entgegengerichteten Stanzkante (33, 37) versehen ist und daß der Schweißstempel (30) eine Matrize (31) und der Gegenbacken (34) eine Patrize (35) aufweisen, deren Höhe (D/2), bezogen auf die Schweißebenen (32, bzw. 36), jeweils derart größer als die Höhe (h, h') der Stanzkante (33, 37 ; 33' ; 33") ist, daß im Zustand des Stanzens Matrize (31) auf Patrize (35) aufliegt und zwischen den Stanzkanten (33, 37) ein Abstand (d) verbleibt (Fig. 8).

9. Vorrichtung nach Anspruch 8, dadurch gekennzeichnet, daß die Höhe (h, h') jeder Stanzkante (33, 37 ; 33' ; 33") kleiner als die Dicke (D/2) der Pappschicht (8, 9) ist.

10. Vorrichtung nach Anspruch 8, dadurch gekennzeichnet, daß sich nur auf einer Seite der Stanzkante (33', 33") eine Schweißfläche (32', 32") hinter einer Vertiefung (43, 43') befindet (Figuren 9a, 9b).

## Claims

1. A packaging means for liquids comprising cardboard, paper or the like, which is impervious to liquid at least on its inside by virtue of a plastics coating and which is provided at least at one side with a double-walled triangular flap (4) whose interior communicates with the interior of the packaging means, wherein a grippable, doubled cardboard strip (2) having a sealing seam is disposed in the upper triangular wall (8) of the triangular flap (4), extending from the tip (3) thereof into the adjacent upper wall panel (1) of the packaging means, and at least one of the two triangular walls (8, 9) of the triangular flap (4) is partially punched into along a line (20) and disposed therebeside, on the side remote from the tip (3) of the triangular flap (4), is a weld seam (22, 23) by means of which the two triangular walls (8, 9) are liquid-tightly welded together, characterised in that the weld seam (22, 23) extends substantially transversely through the doubled cardboard strip (2), in the region of the weld seam (22, 23) the various superposed wall layers (8, 9, 8', 8", 8"') are compressed to almost equal thickness (D), and that the punched line (20) is produced only from one surface of the cardboard layer in such a way that the other surface remains completely untouched.

2. A packaging means according to claim 1, characterised in that a weld seam (22, 23) is disposed on both sides of the punched line (20).

3. A packaging means according to claim 1 or claim 2, characterised in that the weld seam (22, 23) is very narrow.

4. A packaging means according to one of claims 1 to 3, characterised in that the weld seam (22, 23) extends substantially in the centre of the triangular flap (4) from one side edge (10) thereof to the other.

5. A packaging means according to one of claims 1 to 4, characterised in that the weld seam (22, 23) extends in an arcuate configuration, wherein the centre point of the arcuate curvature is disposed on the side of the weld seam (22, 23) which is towards the tip (3) of the triangular flap (4).

6. A packaging means according to one of claims 1 to 5, characterised in that the weld seam (22, 23) is formed as two straight lines which are disposed at an angle to each other and which contact each other, wherein the angle opens towards the tip (3) of the triangular flap (4).

7. A method of producing the packaging means according to one of claims 1 to 6, wherein after the operations of shaping, filling and closing the packaging means, at least one narrow weld seam (22, 23) which can be broken open is formed at the outwardly projecting double-walled triangular flap (4), characterised in that a punched line (20, 21) which partially extends through at least one of the two triangular walls (8, 9) of the triangular flap (4) is formed along the weld seam (22, 23) and in the operation of forming the weld seam (22, 23) the various superposed wall layers (8', 8", 8''', 9) are compressed to the same thickness (D), with air being prevented from entering.

8. Apparatus for producing a liquid packaging means from cardboard or the like, which is impervious to liquid at least on its inside by virtue of a plastics coating and which is provided at least at one side with a double-walled triangular flap (4) whose interior communicates with the interior of the packaging means, wherein a grippable, doubled cardboard strip (2) having a sealing seam is disposed in the upper triangular wall (8) of the triangular flap (4), extending from the tip (3) thereof into the adjacent upper wall panel (1) of the packaging means, and at least one of the two triangular walls (8, 9) of the triangular flap (4) is partially punched into along a line (20) disposed therebeside, on the side remote from the tip (3) of the triangular flap (4), is a weld seam (22, 23) by means of which the two triangular walls (8, 9) are liquid-tightly welded together, wherein a welding punch (30) which is adapted to the shape of the weld seam (22, 23) is provided temperature-controllably movably relative to a co-operating jaw (34), characterised in that the welding punch (30) and the co-operating jaw (34) are each provided with a respective projecting stamping edge (33, 37), with the stamping edges being directed towards each other, and that the welding punch (30) has a female die portion (31) and the co-operating jaw (34) has a male die portion (35), the height of which (D/2), with respect to the welding planes (32 and 36 respectively) is in each case so much greater than the height (h, h') of the stamping edge (33, 37 ; 33', 33") than in the stamping condition the female die portion (31) lies on the male die portion (35) and a spacing (d) remains between the stamping edges (33, 37) (Figure 8).

9. Apparatus according to claim 8, characterised in that the height (h, h') of each stamping edge (33, 37 ; 33', 33") is less than the thickness (D/2) of the cardboard layer (8, 9).

10. Apparatus according to claim 8, characterised in that a welding surface (32', 32") is disposed behind a depression (43, 43') only on one side of the stamping edge (33', 33") (Figures 9a and 9b).

**Revendications**

1. Emballage pour produits liquides, en une matière telle que du carton, du papier ou analogue, qui est imperméabilisée au moins sur sa face interne par une couche de matière plastique, cet emballage comportant au moins d'un côté un volet triangulaire (4) à double paroi, dont l'intérieur communique avec l'intérieur de l'emballage, la paroi triangulaire supérieure (8) du volet triangulaire (4) portant une bande double de carton (2), qui va de la pointe (3) du volet triangulaire à la face supérieure adjacente (1) de l'emballage, et qui est pourvue d'une ligne de soudage d'obturation, et au moins l'une des deux parois triangulaires (8, 9) du volet triangulaire (4) présentant une empreinte emboutie dans une partie de son épaisseur, le long d'une ligne (20), et à côté de celle-ci une ligne de soudage (22, 23) assurant l'assemblage étanche des deux parois triangulaires (8, 9), du côté du volet triangulaire (4) opposé à la pointe (3) de celui-ci ; l'emballage étant caractérisé en ce que la ligne de soudage (22, 23) traverse la bande double de carton (2) à peu près transversalement ; en ce que les diverses épaisseurs superposées des parois (8, 9, 8', 8", 8''') sont comprimées ensemble, sensiblement à la même épaisseur (D) dans la zone de la ligne de soudage (22, 23) et en ce que l'empreinte linéaire (20) n'est pratiquée que sur une face de la couche de carton, de manière à laisser l'autre face totalement intacte.

2. Emballage selon la revendication 1, caractérisé en ce qu'il comporte une ligne de soudage (22, 23) de part et d'autre de l'empreinte linéaire (20).

3. Emballage selon l'une des revendications 1 ou 2, caractérisé en ce que la ligne de soudage (22, 23) est très étroite.

4. Emballage selon l'une quelconque des revendications 1 à 3, caractérisé en ce que la ligne de soudage (22, 23) passe sensiblement au milieu du volet triangulaire (4), en allant d'un bord latéral (10) à l'autre bord latéral de ce volet.

5. Emballage selon l'une quelconque des revendications 1 à 4, caractérisé en ce que la ligne de soudage (22, 23) est courbe, et en ce que le sommet de cette ligne courbe se trouve à l'opposé de la pointe (3) du volet triangulaire (4).

6. Emballage selon l'une quelconque des revendications 1 à 5, caractérisé en ce que la ligne de soudage (22, 23) comporte deux segments rectilignes adjacents qui forment un angle ouvert en regard de la pointe (3) du volet triangulaire (4).

7. Procédé de fabrication de l'emballage selon l'une quelconque des revendications 1 à 6, ce procédé consistant à mettre en forme l'emballage et à le remplir, puis à le fermer en pratiquant au moins une ligne de soudage étroite et pouvant être déchirée (22, 23), sur un volet triangulaire à paroi double (4) en saillie sur cet emballage, caractérisé en ce que, le long de la ligne de soudage (22, 23), on pratique sur au moins l'une des deux parois triangulaires (8, 9) du volet triangulaire (4), une empreinte linéaire (20, 21) dans une partie de l'épaisseur de cette paroi, et en ce qu'en réalisant la ligne de soudage (22, 23), et en évitant une entrée d'air dans l'emballage, on comprime ensemble à la même épaisseur (D) les diverses épaisseurs superposées des parois (8', 8'', 8''', 9).

8. Dispositif pour fabriquer un emballage pour produits liquides en une matière telle que le carton ou analogue, qui est imperméabilisée au moins sur sa face interne par une couche de matière plastique, cet emballage comportant au moins d'un côté un volet triangulaire (4) à double paroi, dont l'intérieur communique avec l'intérieur de l'emballage, la paroi triangulaire supérieure (8) du volet triangulaire (4) portant une bande double de carton (2), qui va de la pointe (3) du volet triangulaire à la face supérieure adjacente (1) de l'emballage, et qui est pourvue d'une ligne de soudage d'obturation, et au moins l'une des deux parois (8, 9) du volet triangulaire (4) présentant une empreinte emboutie dans une partie de son épaisseur, le long d'une ligne (20), et à côté de celle-ci une ligne de soudage (22, 23) assurant l'assemblage étanche des deux parois triangulaires (8, 9), du côté du volet triangulaire (4) opposé à la pointe (3) de celui-ci, ce dispositif comportant un outil de soudage (30), dont la forme est adaptée à celle de la ligne de soudage (22, 23) et dont la température est réglable, et des moyens pour déplacer cet outil de soudage (30) par rapport à un contre-outil opposé (34) : le dispositif étant caractérisé en ce que l'outil de soudage (30) et le contre-outil (34) comportent des arêtes d'emboutissage (33, 37) opposées l'une à l'autre, l'outil de soudage (30) étant pourvu d'une matrice (31), et le contre-outil (34) étant pourvu d'un poinçon (35), dont la hauteur (D/2) par rapport au plan de soudage correspondant (32, 36) est supérieure à la hauteur (h, h') de l'arête d'emboutissage (33, 37 ; 33' ; 33''), de telle manière qu'au moment de l'emboutissage la matrie (31) se trouve au-dessus du poinçon (35), et qu'un écart (d) subsiste entre les arêtes d'emboutissage (33, 37) (Figure 8).

9. Dispositif selon la revendication 8, caractérisé en ce que la hauteur (h, h') de chacune des arêtes d'emboutissage (33, 37 ; 33', 33'') est inférieure à l'épaisseur (D/2) de la couche de carton (8, 9).

10. Dispositif selon la revendication 8, caractérisé en ce qu'il comporte seulement une face de soudage (32', 32'') faisant suite à un évidement (43, 43'), d'un seul côté de l'arête de soudage (33', 33'') (Figures 9a, 9b).

# Fig.1

Fig.2

Fig.3

Fig.4

Fig.5

Fig.6

Fig. 7

Fig.8

30

8  32 33

h

D

9  37 36  B

d  h'

32  43  33' 44

Fig.9a

43'

33"

32"

Fig.9b